# EUROPÄISCHE PATENTSCHRIFT

(11) **EP 3 923 605 B1**
(45) Veröffentlichungstag und Bekanntmachung des Hinweises auf die Patenterteilung: **09.12.2026**
(21) Anmeldenummer: 21177778.4
(22) Anmeldetag: 04.06.2021
(51) Int. Cl.: G06Q 10/0631, H04W 4/40, G06Q 10/02, G08G 1/01, G08G 1/00

(54) **VERFAHREN ZUR KOORDINIERUNG VON FAHRZEUGEN**
METHOD FOR COORDINATING VEHICLES
PROCÉDÉ DE COORDINATION DES VÉHICULES

(30) Priorität: 10.06.2020 DE 102020115496
(43) Veröffentlichungstag der Anmeldung: 15.12.2021
(73) Patentinhaber: E.ON SE, 45131 Essen (DE); Westenergie AG, 45128 Essen (DE)
(72) Erfinder: Becker, Jan-Felix, 40237 Düsseldorf (DE); Pfeffer, Michael, 45131 Essen (DE)
(74) Vertreter: Bals & Vogel Patentanwälte PartGmbB

(56) Entgegenhaltungen:
- US-A1- 2008 195 428
- US-B1- 10 216 194

## Beschreibung

Die vorliegende Erfindung betrifft ein Verfahren zur Koordinierung von Fahrzeugen. Ferner bezieht sich die Erfindung auf eine Straßenausstattungseinrichtung, ein System sowie Computerprogramme zur Koordinierung von Fahrzeugen.

Es ist aus dem Stand der Technik bekannt, dass eine Vernetzung von Fahrzeugen untereinander möglich ist. Die Vernetzung der Fahrzeuge bietet u.a. den Vorteil, dass die Fahrzeuge sich über das Verkehrsaufkommen untereinander informieren können. Diese Informationen können dann bspw. zur Beeinflussung der Verkehrslenkung oder zur Navigation verwendet werden. Darüber hinaus ist es auch bekannt, dass Internetplattformen existieren, mit welchen eine Mitfahrgelegenheit angeboten oder gesucht werden kann. Diese Vermittlung von Transportkapazitäten stellt einen direkten Weg dar, um Transportkapazitäten zu teilen und das Verkehrsaufkommen zu reduzieren.

Das Dokument US 2008/195428 A1 offenbart Mechanismen zur Nutzung von Routen und Transportkapazitäten.

Es ist trotz der bestehenden Lösungen häufig das Problem zu beobachten, dass Fahrzeuge mit sehr geringer Auslastung ihrer Transportkapazität verwendet werden. Dies bringt ein erhöhtes Verkehrsaufkommen sowie höhere Kosten und einen übermäßigen Ressourcenverbrauch mit sich. Auch steigt die Umweltbelastung durch das höhere Verkehrsaufkommen. Aus technischer Sicht zeigt sich ferner das Problem, dass bestehende Lösungen zur Vermittlung von Transportkapazitäten oft noch keine ausreichende Zuverlässigkeit und nur einen eingeschränkten Funktionsumfang und Komfort bieten, um eine signifikante Auslastung von Transportkapazitäten bei der Fahrzeugverwendung und damit einen Einfluss auf die Verkehrsströmezu bewirken. Eine Vielzahl von Fahrzeugen muss in der Konsequenz genutzt werden, um einen Benutzer oder Güter von nahezu gleichen Ausgangsorten (im Folgenden auch als Startorte bezeichnet) zu nahezu gleichen Zielorten zu transportieren. Die Koordinierung der Fahrzeuge ist damit noch nicht ausreichend möglich.

Es ist daher eine Aufgabe der vorliegenden Erfindung, die voranstehend beschriebenen Nachteile zumindest teilweise zu beheben. Es ist insbesondere eine Aufgabe der vorliegenden Erfindung, eine verbesserte Lösung zur Fahrzeugkoordinierung bereitzustellen. Die voranstehende Aufgabe wird gelöst durch ein Verfahren mit den Merkmalen des Anspruchs 1, eine Straßenausstattungseinrichtung mit den Merkmalen des Anspruchs 14, ein System mit den Merkmalen des Anspruchs 15 sowie durch ein Computerprogramm mit den Merkmalen des Anspruchs 16 und ein weiteres Computerprogramm mit den Merkmalen des Anspruchs 17. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit der erfindungsgemäßen Straßenausstattungseinrichtung, dem erfindungsgemäßen System sowie dem erfindungsgemäßen Computerprogramm und weiteren Computerprogramm, und jeweils umgekehrt, sodass bezüglich der Offenbarung zu den einzelnen Erfindungsaspekten stets wechselseitig Bezug genommen wird bzw. werden kann.

Die Aufgabe wird insbesondere gelöst durch ein Verfahren zur, insbesondere automatisierten, Koordinierung von Fahrzeugen. Die Fahrzeuge können hierbei verschiedene Fahrzeugtypen umfassen, bei welchen eine Teilung (d. h. gemeinsame Nutzung) einer Transportkapazität der Fahrzeuge möglich ist. Die Fahrzeuge umfassen somit z. B. Kraftfahrzeuge und/oder Personenkraftfahrzeuge und/oder Busse zur Personenbeförderung und/oder Linienbusse und/oder Lastkraftfahrzeuge und/oder autonome Fahrzeuge und/oder Elektrofahrzeuge und/oder Schienenfahrzeuge und/oder dergleichen. Die Transportkapazität bezeichnet insbesondere eine Kapazität eines Fahrzeuges zum Transport von Personen, also vorzugsweise die Anzahl der Sitzplätze des Fahrzeuges. Eine Teilung der Transportkapazität ist dann durch die Vergabe und Aufteilung der Sitzplätze an verschiedene Personen möglich. Alternativ oder zusätzlich kann die Transportkapazität auch die Kapazität zum Transport von Gütern bezeichnen.

Bei dem erfindungsgemäßen Verfahren ist insbesondere vorgesehen, dass die nachfolgenden Verfahrensschritte durchgeführt werden, vorzugsweise in der angegebenen Reihenfolge oder in beliebiger Reihenfolge, wobei einzelne und/oder sämtliche Schritte auch wiederholt und/oder zeitlich parallel zueinander durchgeführt werden können:
- Bereitstellen einer (insbesondere digitalen) Routensammlung, vorzugsweise in der Form einer Datensammlung, wobei die Routensammlung unterschiedliche Routeninformationen (d. h. insbesondere Daten) aufweist, die jeweils zumindest für einen Startort und/oder einen Zielort und/oder eine Zeitinformation und/oder ein (bestimmtes) Fahrzeug spezifisch sind, welche bspw. einer angebotenen Route zugeordnet sein können, wobei bevorzugt die Routeninformationen jeweils den Startort und/oder Zielort und/oder die Zeitinformation und/oder eine Information über das Fahrzeug als Datensatz aufweist,
- Durchführen einer Erfassung einer (insbesondere digitalen) Eingabeinformation, insbesondere in der Form eines Datensatzes, welche zumindest für einen Wunschstartort und/oder einen Wunschzielort und/oder eine Wunschzeitinformation und/oder eine Fahrzeuganforderung spezifisch ist, welche bspw. einer gewünschten Route zugeordnet werden, wobei auch hier vorzugsweise die Eingabeinformation den Wunschstartort und/oder den Wunschzielort und/oder die Wunschzeitinformation und/oder die Fahrzeuganforderung als Datensatz aufweisen kann,
- Durchführen einer Übersendung der Eingabeinformation an eine Datenverarbeitungsvorrichtung, insbesondere zentrale Datenverarbeitungsvorrichtung, wie wenigstens ein Server und/oder Cloud-Computersystem,
- Durchführen einer Verarbeitung, insbesondere eines Vergleichs, der übersendeten Eingabeinformation und der Routeninformationen in der Routensammlung, (vorzugsweise durch die Datenverarbeitungsvorrichtung,) um bevorzugt wenigstens eine Übereinstimmung und/oder Zuweisung der gewünschten Route zu den angebotenen Routen zu ermitteln,
- Durchführen der Koordinierung anhand eines Ergebnisses der Verarbeitung.

Dies hat den Vorteil, dass automatisch eine Feststellung der Übereinstimmungen erfolgen kann und/oder automatisch eine Zuweisung der gewünschten Route zu einer angebotenen Route (bspw. bei Übereinstimmung) möglich ist. Ein weiterer Vorteil ist, dass die verwendeten Informationen wie Zielort und Startort eine sehr effiziente Zuweisung ermöglichen. Das Ergebnis der Verarbeitung kann z. B. ein Such- und/oder Vergleichsergebnis sein, welche der angebotenen Routen am besten zur gewünschten Route passt bzw. damit übereinstimmt. Hierzu werden bspw. die Kriterien wie Wunschstartort und/oder Wunschzielort und/oder Wunschzeitinformation und/oder Fahrzeuganforderung (also die Anforderungen an das Fahrzeug gemäß der Routeninformationen) herangezogen, wie nachfolgend noch näher beschrieben wird.

Die Zuordnung zur angebotenen bzw. gewünschten Route kann bei dem erfindungsgemäßen Verfahren als rein semantische Zuordnung verstanden werden oder auch tatsächlich durch eine digitale Kennzeichnung der Daten erfolgen. Die angebotene Route kann dabei durch ein erfindungsgemäßes System derart verarbeitet werden, dass die angebotene Route als Angebot einer Transportkapazität verteilt und/oder verarbeitet wird. Auch kann die gewünschte Route durch das erfindungsgemäße System derart verarbeitet werden, dass die gewünschte Route einer angebotenen Route zugewiesen wird, um das Angebot der Transportkapazität anzunehmen und somit eine Teilung der Transportkapazität durchzuführen. Die angebotene Route und die gewünschte Route sind hierbei z. B. jeweils einer eigenen Identitätsinformation zugeordnet. Bspw. kann eine Person, die eine Route anbietet, eine erste Identitätsinformation aufweisen und eine andere Person, die eine gewünschte Route eingibt, eine zweite Identitätsinformation aufweisen. Anhand der Identitätsinformation (welche z. B. eine Kontaktmöglichkeit umfasst) ist es möglich, nach der Zuweisung die Teilung der Transportkapazität an die entsprechenden Personen mitzuteilen und somit die Teilung (also eine gemeinsame Nutzung der Transportkapazität durch die erste und die zweite Person) auch tatsächlich umzusetzen. Dies entspricht der Durchführung der Koordinierung. Die Koordinierung ist mit zunehmender technischer Weiterentwicklung im Transportwesen auch im höheren Grade automatisierbar. So kann eine Identitätsinformation auch keiner Person, sondern einem autonomen Fahrzeug zugeordnet sein, welches automatisch die Information über die Zuweisung bzw. Teilung der Transportkapazität erhält und umsetzt. Die Zuweisung kann z. B. automatisch dann erfolgen, wenn bei der Verarbeitung, insbesondere in der Form eines Vergleichs, eine Übereinstimmung der gewünschten Route und der angebotenen Route festgestellt wird. Auch kann es möglich sein, dass grundsätzlich oder bei mehreren Übereinstimmungen noch eine manuelle Bestätigung der Zuweisung erfolgt.

Die Erfassung der Eingabeinformation kann als eine direkte Eingabe des Wunschstartorts und/oder des Wunschzielorts und/oder der Wunschzeitinformation und/oder der Fahrzeuganforderung ausgeführt sein, welche dann an die Datenverarbeitungsvorrichtung übertragen wird. Alternativ oder zusätzlich kann die Erfassung der Eingabeinformation dadurch erfolgen, dass zumindest ein Teil der Routeninformationen bzw. der angebotenen Routen und der zugehörigen Informationen (wie Zielort und/oder Startort und/oder Zeitinformation und/oder Fahrzeug) aus der Routensammlung einem Benutzer angezeigt werden und ausgewählt werden können. Die Anzeige kann z. B. auf einem Bildschirm eines mobilen Geräts und/oder einer stationären Vorrichtung wie einer Straßenausstattungseinrichtung erfolgen. Die Auswahl kann z. B. dadurch erfolgen, dass der Bildschirm als ein Touchscreen ausgeführt ist. Die durch den Benutzer ausgewählte angebotene Route kann dann als Eingabeinformation an die Datenverarbeitungsvorrichtung übertragen werden. Der ausgewählte Startort wird dann bspw. als Wunschstartort und/oder der ausgewählte Zielort als Wunschzielort und/oder die ausgewählte Zeitinformation als Wunschzeitinformation und/oder das ausgewählte Fahrzeug als Fahrzeuganforderung verwendet. Anschließend kann die Verarbeitung stattfinden, also eine Zuweisung der angebotenen Route zur auswählten Route gemäß der Eingabeinformation erfolgen. Diese Zuweisung kann z. B. zur Folge haben, dass die angebotene Transportkapazität der angebotenen Route verringert wird und/oder die Route nicht mehr angeboten werden kann, wenn die Transportkapazität erschöpft ist.

Die Eingabeinformation kann über die Fahrzeuganforderung eine Information umfassen, welche Transportkapazität gewünscht, also benötigt, wird. Die Fahrzeuganforderung kann also eine Anforderung an das Fahrzeug definieren. Weitere Anforderungen können bspw. die Art des Fahrzeuges betreffen, wie bspw. eine bestimmte Art der Motorisierung. Die Routeninformation kann eine Information umfassen, welche Transportkapazität für die konkrete angebotene Route verfügbar ist. Bspw. ist dem konkreten Startort und/oder dem konkreten Startziel und/oder der konkreten Zeitinformation (wie einem Datum und eine Uhrzeit) der Routeninformation eine bestimmte Fahrzeuginformation zugeordnet, welche die verfügbare Transportkapazität wie eine Anzahl der Sitzplätze oder dergleichen angibt. Bei der Verarbeitung kann die verfügbare Transportkapazität mit der gewünschten Transportkapazität verglichen werden. Wenn die gewünschte Route dieser angebotenen Route zugewiesen wird, kann entsprechend die verfügbare Transportkapazität gemäß der Routeninformation um die gewünschte Transportkapazität gemäß der Fahrzeuganforderung der Eingabeinformation verringert werden.

Zusätzlich oder alternativ zum Transport von Fahrzeuginsassen umfasst die Erfindung auch den Transport von Gütern. Merkmale und Vorteil, die im Zusammenhang mit dem Transport von Fahrzeuginsassen beschrieben worden sind, gelten daher auch im Zusammenhang mit dem Transport von Gütern. Die Transportkapazität kann sich entsprechend auch auf die Kapazität zur Beförderung von Gütern beziehen.

Die Bereitstellung der Routensammlung kann auch als eine Bereitstellung eines Fahrzeugpools verstanden werden. Es kann vorgesehen sein, dass zur Bereitstellung der Routensammlung und/oder zur Erfassung der Eingabeinformation zunächst eine Registrierung wenigstens eines Benutzers stattfindet. Damit macht der Benutzer deutlich, dass die Teilnahme am Pool gewünscht ist. Hierzu ist die Eingabe von Daten erforderlich, wie einer Personenidentität, einer Fahrzeugidentität eines Fahrzeuges (Art des Fahrzeuges usw.) und dergleichen. Aus diesen Daten kann dann die Routeninformation gebildet werden. Insbesondere kann hierbei auch ermittelt werden, welche Vorteile das konkrete Fahrzeug gemäß der Fahrzeugidentität für die Koordinierung hat (z. B. eine Größe mit einer guten Transportkapazität und/oder eine besonders umweltfreundliche Antriebsart, also z. B. eine Übereinstimmung mit vorgegebenen Anforderungen hinsichtlich der Emission, wie der CO2-Emission). Die eingegebenen Daten können - vorzugsweise verschlüsselt - auf einer zentralen Datenverarbeitungsvorrichtung und/oder auf einem Mobilgerät und/oder einem Festcomputer gespeichert werden. Anschließend kann das Fahrzeug - ggf. manuell oder zumindest teilweise automatisiert - aktiv geschaltet werden. Dies bedeutet, dass die Teilnahme am Pool genehmigt wurde. Die Daten über das Fahrzeug, wie die angebotene Transportkapazität, können sodann in einem Netzwerk bzw. in einer Cloud freigegeben werden, also in der Routensammlung verfügbar gemacht werden. Ferner ist es denkbar, dass auch weitere Routeninformationen wie ein Ausgangsort (Startort) und/oder ein Zielort und/oder ein Zeitpunkt für die Hinfahrt zum Zielort (Zeitinformation) und/oder die Rückfahrt zum Ausgangsort und/oder dergleichen vorgesehen sind.

Die Zeitinformation umfasst z. B. ein Datum und/oder eine Uhrzeit und/oder wenigstens einen Wochentag, an welchem die Route angeboten, d. h. gefahren, wird. Die Daten können ebenfalls in einem Netzwerk freigegeben werden. Das Netzwerk kann ein offenes Netzwerk umfassen, wie das Internet. Auch kann das Netzwerk ein geschlossenes Netzwerk umfassen, wie ein Firmennetzwerk. Es kann wenigstens eine Schnittstelle vorgesehen sein, welche z. B. eine Kommunikation und/oder einen Datenaustausch mit einer Navigationssoftware bietet. Ebenfalls ist es denkbar, dass firmenbezogen mehrere Fahrzeuge, also ein firmenbezogener Fahrzeugpool, registriert wird. Diese Information wird sodann durch die Identitätsinformation gespeichert. Die Identitätsinformation kann zumindest die Personenidentität und/oder die Fahrzeugidentität umfassen.

Es ist ferner denkbar, dass wenigstens eine Anwendungssoftware vorgesehen ist, also wenigstens ein Computerprogramm, welches einem Benutzer die Funktionen des erfindungsgemäßen Verfahrens bereitstellt. Diese Anwendungssoftware wird z. B. durch die erfindungsgemäßen Computerprogramme bereitgestellt. Die wenigstens eine Anwendungssoftware bietet z. B. eine grafische Benutzeroberfläche, um eine Eingabe der vorgenannten Daten zumindest teilweise bereitzustellen. Die Eingabe kann dann auf einem Gerät erfolgen, auf welchem die Anwendungssoftware ausgeführt ist. Das Gerät ist bspw. ein Festcomputer und/oder ein Mobilgerät wie ein Mobilfunkgerät und/oder Smartphone und/oder Tablet und/oder eine Straßenausstattungseinrichtung. Die eingegebenen Daten können dann an einen Server, also eine zentrale Datenverarbeitungsanlage, bspw. über ein Mobilfunknetz, übertragen werden.

Es ist denkbar, dass die Anwendungssoftware eine Buchungsfunktion und/oder eine Angebotsfunktion, in der ein Benutzer eine Transportkapazität für eine Strecke zwischen einem bestimmten Startort und einem bestimmten Zielort aktiv anbietet, bereitstellt. Diese ermöglicht es für einen Benutzer, über die Eingabeinformation Wunschdaten wie eine gewünschte Route und/oder einen gewünschten Zeitpunkt und/oder weitere Kriterien wie die Transportkapazität einzugeben. Die eingegebenen Wunschdaten können dann mit den Daten (insbesondere Routeninformationen) in der Routensammlung abgeglichen werden. Dabei kann die Datenverarbeitungsvorrichtung eine Übereinstimmung der Wunschdaten und der Daten in der Routensammlung feststellen, und diese dem Benutzer über die Anwendungssoftware mitteilen. Ferner kann bei einer Übereinstimmung dem Benutzer die Möglichkeit gegeben werden, die Buchung abzuschließen, um die Zuweisung final durchzuführen bzw. zu bestätigen.

Es kann vorgesehen sein, dass die Anwendungssoftware auf einem mobilen Gerät (wie einem Mobilfunkgerät oder dergleichen) ausgeführt wird, um die Eingabeinformation einzugeben. Anschließend kann zur Erfassung der Eingabeinformation die Eingabeinformation von dem mobilen Gerät an eine stationäre Vorrichtung wie eine Straßenausstattungseinrichtung (z. B. eine Laterne) oder eine Ladestation, übertragen werden und von der Straßenausstattungseinrichtung oder Ladestation anschließend an die Datenverarbeitungsvorrichtung weiter übertragen werden. Die Eingabeinformation kann z. B. Orts- und Zeitdaten umfassen, welche bei einer Route gewünscht werden. Es kann möglich sein, dass die Straßenausstattungseinrichtung oder Ladestation vor dem Übertragen an die Datenverarbeitungsvorrichtung die Eingabeinformation um weitere Informationen ergänzt, wie z. B. einen Ort der Straßenausstattungseinrichtung bzw. Ladestation. Das erfindungsgemäße Verfahren kann es ermöglichen, im Rahmen der Koordinierung der Fahrzeuge, Verkehrswege vorherzusagen und bspw. eine Verkehrslenkung durchzuführen (bspw. eine Ampelschaltung anzusteuern). Auch kann ggf. eine Stauprognose stattfinden.

Ferner ist es optional vorgesehen, dass zumindest die Schritte der Erfassung und/oder Übersendung durch eine Straßenlaterne durchgeführt werden. Die Straßenlaterne kann als eine Straßenbeleuchtung zur Beleuchtung der Straßen und Fußgängerwege dienen. Somit dient die Straßenlaterne zur Gewährleistung der Verkehrssicherheit. Dies hat den Vorteil, dass Straßenlaternen sehr häufig und engmaschig vorgesehen sind und somit eine großzügige Verfügbarkeit existiert. Zur Beleuchtung umfasst die Straßenlaterne bspw. mindestens eine Leuchtdiode. Die Straßenlaterne kann eine Elektronik aufweisen, welche z. B. eine Erfassungsvorrichtung und eine Übertragungsvorrichtung umfasst. Bspw. umfasst die Erfassungsvorrichtung ein Eingabemittel wie ein Touchscreen, um die Eingabeinformation direkt an der Straßenlaterne einzugeben. Auch kann es möglich sein, dass die Erfassungsvorrichtung als eine Funkschnittstelle zu einem mobilen Gerät ausgeführt ist, damit die Eingabeinformation über das mobile Gerät eingegeben und an die Erfassungsvorrichtung übertragen werden kann. Die Straßenlaterne bietet eine einfache und komfortable Möglichkeit zur Auswahl einer gewünschten Route.

Bevorzugt kann im Rahmen der Erfindung vorgesehen sein, dass zumindest die Schritte der Erfassung und/oder Übersendung durch ein mobiles Gerät wie ein tragbares Mobilfunkgerät und/oder durch eine stationäre Vorrichtung wie eine Straßenausstattungseinrichtung durchgeführt werden. Die Straßenausstattungseinrichtung kann im Rahmen der Erfindung als eine stationäre Vorrichtung verstanden werden, welche an Straßen und Wegen stationär, also unbeweglich, vorgesehen ist. Damit kann die Straßenausstattungseinrichtung z. B. Straßenausstattungen als auch stationäre Ladevorrichtungen für Elektrofahrzeuge umfassen. Der Ort der Straßenausstattungseinrichtung kann somit fest vorgegeben sein, und bspw. fest in einem nicht-flüchtigen Speicher der Straßenausstattungseinrichtung hinterlegt sein. Auch kann es möglich sein, dass anhand einer Identifizierung der Straßenausstattungseinrichtung die Datenverarbeitungsvorrichtung in der Lage ist, den Ort der Straßenausstattungseinrichtung eindeutig zu bestimmen. Auf diese Weise kann bei oder nach der Erfassung und/oder Übersendung der Ort, insbesondere der Wunschstartort oder Wunschzielort, automatisch bestimmt werden. Bei dem mobilen Gerät ist es hingegen denkbar, dass der veränderbare Ort des mobilen Geräts dynamisch z. B. durch ein GPS-System ermittelt wird. Auf diese Weise kann bei der Erfassung und/oder Übersendung ebenfalls der Wunschstartort oder Wunschzielort als der veränderte Ort des mobilen Geräts automatisch festgelegt werden.

Des Weiteren ist es denkbar, dass die Straßenausstattungseinrichtung zumindest eine der nachfolgenden Einrichtungen, insbesondere stationäre Vorrichtungen, umfasst:
- eine Straßenbeleuchtungsvorrichtung, insbesondere eine Straßenleuchte, vorzugsweise eine Straßenlaterne,
- eine Ladevorrichtung, insbesondere eine stationäre Ladestation für Elektrofahrzeuge,
- ein Verkehrszeichen,
- ein Teil eines Fahrzeugrückhaltesystems,
- eine Einrichtung zur Wegweisung,
- eine Lichtzeichenanlage.

Hierbei ist der Vorteil darin zu sehen, dass die Straßenausstattungseinrichtungen mit einer hohen Anzahl und engmaschig an den häufig frequentierten Routen vorgesehen sind. Die Straßenausstattungseinrichtungen können wenigstens eine Übertragungsvorrichtung in der Form einer Kommunikationsschnittstelle, vorzugsweise Funkschnittstelle, aufweisen, unter anderem um:
- einen Datenaustausch mit einem mobilen Gerät, wie einem Smartphone, durchzuführen und/oder
- einen Datenaustausch mit einer Datenverarbeitungsvorrichtung, insbesondere über das Internet und/oder eine Cloud, durchzuführen und/oder
- einen Datenaustausch mit wenigstens einem Fahrzeug durchzuführen.

Im Rahmen der Erfindung wird auch eine stationäre Ladestation als eine Straßenausstattungseinrichtung verstanden, da die Ladestation immer an einer Straße oder einem sonstigen befahrbaren Weg vorgesehen ist. Diese Zuordnung wird auch unabhängig davon vorgenommen, ob sich die Ladestation an einer öffentlichen Straße oder auf einem nur privat zugänglichen Gelände befindet. Die Straßenausstattungseinrichtung hat also die Eigenschaft, immer über die Route zugänglich zu sein, sodass hier eine optimale Zugänglichkeit, bspw. für die Erfassung der Eingabeinformation, besteht.

Damit ist nicht nur eine Übertragung der Eingabeinformation möglich, sondern alternativ oder zusätzlich auch eine Vernetzung unterschiedlicher Fahrzeuge und/oder unterschiedlicher mobiler Geräte und/oder unterschiedlicher Straßenausstattungseinrichtungen untereinander möglich. Es kann vorgesehen sein, dass im Rahmen der Koordinierung der Fahrzeuge die Route eines Fahrzeuges automatisch durch die Straßenausstattungseinrichtung über den Datenaustausch verfolgt wird und/oder ein aktueller Wunschstartort einer aktuell gewünschten Route an das Fahrzeug über den Datenaustausch mitgeteilt wird. Somit kann es vorgesehen sein, dass die Routeninformationen nicht nur Informationen über zukünftig angebotene Routen, sondern auch über aktuell befahrende Routen umfassen, bei denen die Startzeit in der Vergangenheit liegt, die Ankunftszeit jedoch in der Zukunft. Die Start- und Ankunftszeit können daher auch Teil der Zeitinformation sein.

Nach einer weiteren Möglichkeit kann vorgesehen sein, dass das Bereitstellen der Routensammlung dadurch erfolgt, dass die Routeninformationen für unterschiedliche Startorte und/oder Zielorte und/oder Zeitinformationen und/oder Fahrzeuge eingegeben werden, vorzugsweise über unterschiedliche Straßenausstattungseinrichtungen. Dabei kann die Eingabe von unterschiedlichen Personen (Benutzern) und unterschiedlichen Standorten aus erfolgen.

Es kann optional möglich sein, dass bei der Eingabe der Startort oder der Zielort der Routeninformation automatisch anhand eines Ortes der für die Eingabe verwendeten Straßenausstattungseinrichtung festgelegt wird. So ist es denkbar, dass an dem Ort der Straßenausstattungseinrichtung auch der Startort oder Zielort liegt. Insbesondere bei Ladevorrichtungen ist dies häufig der Fall, da das Fahrzeug von einem Benutzer am Heimatort oder am Arbeitsort aufgeladen wird. Dies hat den weiteren technischen Vorteil, dass die Stelle zur Eingabe für den Aufladevorgang auch der Stelle für die Eingabe der Eingabeinformation entspricht. Somit wird die Koordinierung der Fahrzeuge deutlich vereinfacht.

Es kann im Rahmen der Erfindung vorgesehen sein, dass die Erfassung durch eine Straßenausstattungseinrichtung durchgeführt wird, wobei der Wunschstartort oder der Wunschzielort der Eingabeinformation automatisch anhand eines Ortes der Straßenausstattungseinrichtung festgelegt wird. Auch hier ist es denkbar, dass an dem Ort der Straßenausstattungseinrichtung auch der Wunschstartort oder der Wunschzielort liegt. Auch kann es möglich sein, dass der Zeitpunkt der Eingabe der Eingabeinformation auch der gewünschten Startzeit gemäß der Wunschzeitinformation entspricht. Eine Erfassungsvorrichtung kann daher z. B. einen Speicher und/oder einen Zeitgeber aufweisen, um automatisch den Wunschstartort und/oder den Wunschzielort und/oder wenigstens einen Teil der Wunschzeitinformation der Eingabeinformation hinzuzufügen. Ebenfalls kann es möglich sein, dass dieser Vorgang durch die Datenverarbeitungsvorrichtung durchgeführt wird.

Es ist ferner denkbar, dass die Datenverarbeitungsvorrichtung als eine zentrale Vorrichtung zur Datenverarbeitung, wie wenigstens ein Server, ausgeführt ist. Die Datenverarbeitungsvorrichtung kann dabei Teil eines Netzwerkes sein, wie ein Cloud-Netzwerk und/oder das Internet. Die Datenverarbeitungsvorrichtung kann wenigstens einen Prozessor und/oder Speicher aufweisen, um eines der erfindungsgemäßen Computerprogramme bereitzustellen und/oder auszuführen.

Vorteilhaft ist es darüber hinaus, wenn im Rahmen der Erfindung das Durchführen der Erfassung der Eingabeinformation durch eine Erfassungsvorrichtung durchgeführt wird, wobei vorzugsweise die Erfassungsvorrichtung zur Übertragung von Vorgabedaten in Datenverbindung mit einer Datenverarbeitungsanlage, wie einem zentralen Server, steht, um den Wunschstartort und/oder den Wunschzielort und/oder die Wunschzeitinformation und/oder die Fahrzeuganforderung automatisch vorgegeben anhand der Vorgabedaten einzustellen. Bspw. ist es denkbar, dass für bestimmte Wunschzielorte und/oder bei der Erfassung der Eingabeinformation über bestimmte Erfassungsvorrichtungen und/oder bestimmte Straßenausstattungseinrichtungen Vorgaben für die Eingabeinformation vorgesehen sind. Diese Vorgaben können vom Ort der Straßenbeleuchtungsvorrichtung bzw. Erfassungsvorrichtung abhängen und/oder von der Datenverarbeitungsanlage vorgegeben sein. Es kann ebenfalls sinnvoll sein, wenn über eine bestimmte Erfassungsvorrichtung nur bestimmte Personen die Eingabeinformation erfassen und somit die gewünschte Route mitteilen können. Hierzu kann eine Überprüfung der Identitätsinformation durch die Erfassungsvorrichtung stattfinden. Alternativ oder zusätzlich kann es möglich sein, dass durch die Vorgabe der Fahrzeuganforderung automatisch nur bestimmte Fahrzeuge berücksichtigt werden, welche für die bestimmte Person zugänglich sind.

Des Weiteren kann vorgesehen sein, dass bei dem Durchführen der Erfassung der Eingabeinformation eine Identitätsinformation erfasst wird und vorzugsweise bei dem Durchführen der Verarbeitung bzw. des Vergleichs zumindest der Wunschzielort und/oder die Fahrzeuganforderung und/oder die Identitätsinformation mit einer Prioritätsvorgabe verglichen werden, um bevorzugt abhängig von der Verarbeitung bzw. dem Vergleich mit der Prioritätsvorgabe die Ermittlung der Übereinstimmung und/oder Zuweisung und/oder die Koordinierung (insbesondere anhand dieser Übereinstimmung und/oder Zuweisung) zu priorisieren. Insbesondere ist es hierbei denkbar, dass bestimmte Personen und/oder Personengruppen gemäß der Identitätsinformation Vorrang bei der Zuweisung erhalten.

Zudem ist im Rahmen der Erfindung denkbar, dass die nachfolgenden Schritte zur Bereitstellung der Routensammlung durchgeführt werden:
- Eingeben einer Identitätsinformation,
- Registrieren eines Fahrzeuges,
- Eingeben zumindest des Startorts und des Zielorts und der Zeitinformation, um eine neue Routeninformation zu erhalten bzw. zu erstellen,
- Zuordnen der neuen Routeninformation zum registrierten Fahrzeug und zur Identitätsinformation.

Auf diese Weise können verschiedene Benutzer Routen anbieten und in einem Netzwerk bekanntmachen. Das Netzwerk umfasst z. B. verschiedene Erfassungsvorrichtungen (insbesondere verschiedener Straßenausstattungseinrichtungen und/oder mobiler Geräte), welche mit der Datenverarbeitungsvorrichtung in Datenverbindung gebracht werden können und daher Zugriff auf die Routensammlung haben.

Des Weiteren ist es im Rahmen der Erfindung optional möglich, dass das Durchführen der Koordinierung wenigstens eine der nachfolgenden Aktionen umfassen:
- eine Ansteuerung eines Navigationssystems wenigstens eines Fahrzeuges, um eine Zielführung für das Fahrzeug, insbesondere automatisch, einzustellen und/oder zu initiieren,
- eine Anpassung einer Verkehrslenkung, insbesondere durch eine automatische Umschaltung von Ampeln oder dergleichen,
- eine Parametrisierung wenigstens eines autonomen Fahrzeuges, vorzugsweise eine Routeneinstellung für das autonome Fahrzeug und/oder eine Initiierung einer Fortbewegung des Fahrzeuges,
- eine Anpassung von Fahrzeugdaten für das Fahrzeug der Routeninformation anhand der Fahrzeuganforderung, insbesondere eine Anpassung der verfügbaren Sitzplätze des Fahrzeuges,
- eine Bereitstellung von Analysedaten anhand der übereinstimmenden und/oder zugewiesenen Routen.

Damit ist die automatische Durchführung von Koordinierungsaktionen möglich, um die Auslastung von Transportkapazitäten und das Verkehrsaufkommen deutlich zu optimieren.

Zudem ist im Rahmen der Erfindung denkbar, dass die Routensammlung durch eine Datenbank bereitgestellt ist, wobei die unterschiedlichen Routeninformationen jeweils den Startort und den Zielort und die Zeitinformation und das Fahrzeug als Datensatz der Datenbank zur Bekanntmachung der angebotenen Route aufweisen. Die Bekanntmachung kann z. B. im voranstehend beschriebenen Netzwerk erfolgen. Somit kann eine Vielzahl von Benutzern das erfindungsgemäße Verfahren nutzen.

Des Weiteren ist es im Rahmen der Erfindung optional möglich, dass die Datenverarbeitungsvorrichtung mit einer Vielzahl von Straßenausstattungseinrichtungen in Datenverbindung steht, um dort die Routeninformationen bereitzustellen. Somit ist der Zugriff auf die Routensammlung von verschiedenen Straßenausstattungseinrichtungen möglich, ohne dass der Benutzer ein eigenes Gerät hierfür nutzen muss.

Vorteilhafterweise kann im Rahmen der Erfindung vorgesehen sein, dass die Routeninformation jeweils
- dadurch für das Fahrzeug spezifisch ist, dass die Routeninformation eine Angabe über Fahrzeugeigenschaften umfasst, welche der angebotenen Route zugeordnet sind, wie z. B. eine Transportkapazität des Fahrzeuges, und/oder
- dadurch für einen Startort spezifisch ist, dass die Routeninformation eine Ortsangabe umfasst, an welchem Ort die Route mit dem Fahrzeug beginnt, und/oder
- dadurch für einen Zielort spezifisch ist, dass die Routeninformation eine Ortsangabe umfasst, an welchem Ort die Route mit dem Fahrzeug endet, und/oder
- dadurch für die Zeitinformation spezifisch ist, dass die Routeninformation eine Zeitangabe über den Beginn und/oder die Dauer der Route aufweist.

Somit sind die für einen Benutzer interessanten Angaben zur Route in der Routensammlung vorgesehen. Damit ist gewährleistet, dass der Benutzer eine Route findet, die seiner gewünschten Route möglichst umfassend entspricht.

Optional ist es denkbar, dass das Durchführen einer Übersendung der Eingabeinformation über eine Funkverbindung, insbesondere über ein Mobilfunknetz, durchgeführt wird. Somit kann sehr flexibel und ggf. auch von unterwegs das erfindungsgemäße Verfahren genutzt werden.

Weiter ist im Rahmen der Erfindung denkbar, dass das Durchführen der Verarbeitung bzw. des Vergleichs der übersendeten Eingabeinformation mit bzw. und den Routeninformationen in der Routensammlung zumindest teilweise dadurch erfolgt, dass eine angebotene Route nach wenigstens einem der folgenden Kriterien gesucht wird:
- dass die angebotene Route einen Startort aufweist oder durch einen Ort führt, welcher innerhalb einer vordefinierten Toleranz mit dem Wunschstartort der gewünschten Route übereinstimmt,
- dass die angebotene Route einen Zielort aufweist oder durch einen Ort führt, welcher innerhalb einer vordefinierten Toleranz mit dem Wunschzielort der gewünschten Route übereinstimmt,
- dass die angebotene Route eine Zeitinformation aufweist, welche mit der Wunschzeitinformation innerhalb einer vordefinierten Toleranz übereinstimmt,
- dass die angebotene Route ein Fahrzeug bereitstellt und/oder eine Transportkapazität des Fahrzeuges bereitstellt, welche mit der Fahrzeuganforderung innerhalb einer vordefinierten Toleranz übereinstimmt,
sodass vorzugsweise anhand der Suche wenigstens eine übereinstimmende Route als das Ergebnis der Verarbeitung ermittelt wird. Die vordefinierte Toleranz kann z. B. einen Radius um einen bestimmten Ort oder eine Zeitspanne umfassen. Dies ermöglicht eine schnelle Filterung der für einen Benutzer interessanten angebotenen Routen. Bei mehreren übereinstimmenden Routen können diese z. B. als Liste ausgegeben werden, aus welcher ein Benutzer manuell frei auswählen kann, oder es wird automatisch die erste übereinstimmende Route gewählt.

Ebenfalls Gegenstand der Erfindung ist eine Straßenausstattungseinrichtung, insbesondere eine Straßenbeleuchtungsvorrichtung oder eine Ladevorrichtung, aufweisend:
- eine Erfassungsvorrichtung zum Durchführen einer Erfassung einer Eingabeinformation, welche zumindest für einen Wunschstartort und/oder einen Wunschzielort und/oder eine Wunschzeitinformation und/oder eine Fahrzeuganforderung spezifisch ist und/oder diese als Datensatz aufweist, welche vorzugsweise einer gewünschten Route zugeordnet werden,
- eine Übertragungsvorrichtung zum Durchführen einer Übersendung der Eingabeinformation an eine Datenverarbeitungsvorrichtung, um eine Verarbeitung, insbesondere einen Vergleich, der übersendeten Eingabeinformation und unterschiedlicher Routeninformationen in einer Routensammlung (insbesondere durch die Datenverarbeitungsvorrichtung) zu initiieren, durch welche wenigstens eine Übereinstimmung und/oder Zuweisung der gewünschten Route zu angebotenen Routen ermittelbar ist und um eine Koordinierung von Fahrzeugen anhand eines Ergebnisses der Verarbeitung bzw. des Vergleichs zu initiieren.

Hierbei kann vorgesehen sein, dass die Routensammlung die unterschiedlichen Routeninformationen aufweist, die jeweils zumindest für einen Startort und/oder einen Zielort und/oder eine Zeitinformation und/oder ein Fahrzeug spezifisch sein können, welche der angebotenen Route zugeordnet sein können. Damit bringt die erfindungsgemäße Straßenausstattungseinrichtung die gleichen Vorteile mit sich, wie sie ausführlich mit Bezug auf ein erfindungsgemäßes Verfahren beschrieben worden sind. Zudem kann die Straßenausstattungseinrichtung geeignet sein, wenigstens die Verfahrensschritte der Erfassung und/oder der Übersendung eines erfindungsgemäßen Verfahrens durchzuführen. Die erfindungsgemäße Straßenausstattungseinrichtung kann zudem entsprechend der im Zusammenhang mit dem erfindungsgemäßen Verfahren beschriebenen Straßenausstattungseinrichtung ausgebildet sein.

Ebenfalls Gegenstand der Erfindung ist ein System zur Ausführung eines erfindungsgemäßen Verfahrens.

Hierbei ist vorgesehen, dass das erfindungsgemäße System zumindest umfasst:
- eine - insbesondere erfindungsgemäße - Straßenausstattungseinrichtung,
- eine Datenverarbeitungsvorrichtung zur Bereitstellung der Routensammlung und zur Durchführung der Verarbeitung und der Koordinierung.

Damit bringt das erfindungsgemäße System die gleichen Vorteile mit sich, wie sie ausführlich mit Bezug auf ein erfindungsgemäßes Verfahren und/oder eine erfindungsgemäße Straßenausstattungseinrichtung beschrieben worden sind.

Vorteilhafterweise ist die Datenverarbeitungsvorrichtung von der Straßenausstattungseinrichtung separat ausgeführt und z. B. über mehrere Kilometer entfernt davon angeordnet. Daher kann die Übersendung als eine Übersendung über ein Netzwerk wie ein Mobilfunknetz und/oder Internet ausgeführt sein. Auch kann die Übersendung als eine Funkübertragung ausgeführt sein. Entsprechend kann die Übertragungsvorrichtung auch als eine Funkschnittstelle und/oder Mobilfunkschnittstelle ausgeführt sein. Die Datenverarbeitungsvorrichtung kann z. B. einen oder mehrere Computer (Server) umfassen.

Ebenfalls Gegenstand der Erfindung ist ein (erstes) Computerprogramm, insbesondere Computerprogrammprodukt, umfassend Befehle, die bei der Ausführung durch wenigstens ein Datenverarbeitungsmittel dieses veranlassen, die nachfolgenden Schritte durchzuführen:
- Durchführen einer Erfassung einer Eingabeinformation, welche zumindest für einen Wunschstartort und/oder einen Wunschzielort und/oder eine Wunschzeitinformation und/oder eine Fahrzeuganforderung spezifisch ist und/oder diese als Datensatz aufweist, welche insbesondere einer gewünschten Route zugeordnet werden,
- Durchführen einer Übersendung der Eingabeinformation an wenigstens eine (entfernte) Datenverarbeitungsvorrichtung, um eine Verarbeitung und insbesondere einen Vergleich der übersendeten Eingabeinformation mit unterschiedlichen Routeninformationen in einer Routensammlung zu initiieren, durch welche wenigstens eine Übereinstimmung und/oder Zuweisung der gewünschten Route zu angebotenen Routen ermittelbar ist, und bevorzugt um eine Koordinierung von Fahrzeugen anhand eines Ergebnisses der Verarbeitung bzw. des Vergleichs zu initiieren.

Hierbei ist insbesondere vorgesehen, dass die Routensammlung die unterschiedlichen Routeninformationen aufweist, die jeweils zumindest für einen Startort und/oder einen Zielort und/oder eine Zeitinformation und/oder ein Fahrzeug spezifisch sein können, welche der angebotenen Route zugeordnet sind. Damit bringt das erfindungsgemäße Computerprogramm die gleichen Vorteile mit sich, wie sie ausführlich mit Bezug auf ein erfindungsgemäßes Verfahren beschrieben worden sind. Zudem kann das Computerprogramm geeignet sein, ein erfindungsgemäßes Verfahren zumindest teilweise auszuführen, insbesondere die Schritte der Erfassung und Übersendung. Das Computerprogramm ist z. B. als eine App ausgeführt, welche von einem Mobilgerät wie ein Mobilfunkgerät (bspw. ein Smartphone) oder ein Laptop oder ein Tablet ausgeführt wird. Das Datenverarbeitungsmittel kann dabei z. B. als Teil einer erfindungsgemäßen Straßenausstattungseinrichtung oder des Mobilgeräts ausgebildet sein, z. B. als wenigstens ein Computer der Straßenausstattungseinrichtung bzw. des Mobilgeräts. Das Datenverarbeitungsmittel kann zur Speicherung des Computerprogramms einen nicht-flüchtigen Datenspeicher aufweisen und zur Ausführung des Computerprogramms einen Prozessor, welcher mit dem Speicher in Datenverbindung steht. Das Datenverarbeitungsmittel kann Teil einer Übertragungsvorrichtung und/oder einer Erfassungsvorrichtung sein.

Ebenfalls unter Schutz gestellt ist ferner ein weiteres (zweites) Computerprogramm, insbesondere Computerprogrammprodukt, umfassend Befehle, die bei der Ausführung durch wenigstens eine Datenverarbeitungsvorrichtung diese veranlassen, die nachfolgenden Schritte durchzuführen:
- Bereitstellen einer Routensammlung, wobei die Routensammlung unterschiedliche Routeninformationen aufweist, die jeweils zumindest für einen Startort und/oder einen Zielort und/oder eine Zeitinformation und/oder ein Fahrzeug spezifisch sein können, welche vorzugsweise einer angebotenen Route zugeordnet sind,
- Empfangen einer erfassten Eingabeinformation, insbesondere von dem Datenverarbeitungsmittel und/oder einer Übertragungsvorrichtung, wobei die Eingabeinformation zumindest für einen Wunschstartort und/oder einen Wunschzielort und/oder eine Wunschzeitinformation und/oder eine Fahrzeuganforderung spezifisch ist und/oder diese als Datensatz aufweisen kann, welche vorzugsweise einer gewünschten Route zugeordnet ist,
- Durchführen einer Verarbeitung, insbesondere eines Vergleichs, der empfangenen Eingabeinformation mit den Routeninformationen in der Routensammlung, um wenigstens eine Übereinstimmung und/oder Zuweisung der gewünschten Route zu den angebotenen Routen zu ermitteln,
- Initiieren einer Koordinierung von Fahrzeugen anhand eines Ergebnisses der Verarbeitung bzw. des Vergleichs.

Das weitere Computerprogramm kann bspw. auf wenigstens einem Server ausgeführt werden, sodass die Datenverarbeitungsvorrichtung als der Server oder Teil des wenigstens einen Servers ausgeführt ist. Das erfindungsgemäße weitere Computerprogramm bringt die gleichen Vorteile mit sich, wie sie ausführlich in Bezug auf ein erfindungsgemäßes Verfahren beschrieben worden sind. Zudem kann das erfindungsgemäße weitere Computerprogramm dazu ausgeführt sein, die Verfahrensschritte eines erfindungsgemäßen Verfahrens, insbesondere die Verarbeitung und/oder Koordinierung, zumindest teilweise, auszuführen. Die Datenverarbeitungsvorrichtung kann zur Speicherung des Computerprogramms einen nicht-flüchtigen Datenspeicher aufweisen und zur Ausführung des Computerprogramms einen Prozessor, welcher mit dem Speicher in Datenverbindung steht.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Figur 1: eine schematische Darstellung eines erfindungsgemäßen Systems,
- Figur 2: eine schematische Darstellung eines erfindungsgemäßen Verfahrens.

In den nachfolgenden Figuren werden für die gleichen technischen Merkmale auch von unterschiedlichen Ausführungsbeispielen die identischen Bezugszeichen verwendet.

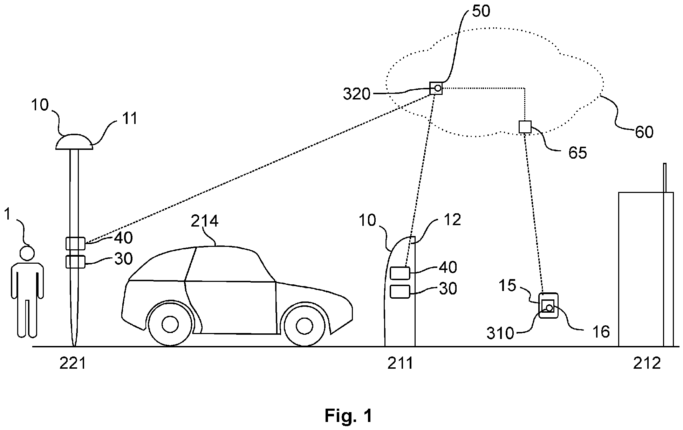

In Figur 1 sind Teile eines erfindungsgemäßen Systems gezeigt, insbesondere Beispiele einer erfindungsgemäßen Straßenausstattungseinrichtung 10 und eine Datenverarbeitungsvorrichtung 50. Die erfindungsgemäße Straßenausstattungseinrichtung 10 kann als eine Straßenbeleuchtungsvorrichtung 11, wie eine Straßenlaterne 11, ausgebildet sein. Auch ist es denkbar, dass die Straßenausstattungseinrichtung 10 als eine Ladevorrichtung 12, wie eine stationäre Ladestation 12, für ein Elektrofahrzeug 214 ausgebildet ist. Die jeweilige Straßenausstattungseinrichtung 10 kann dabei eine Übertragungsvorrichtung 40 aufweisen, um eine Datenübertragung an die Datenverarbeitungsvorrichtung 50 durchzuführen.

Die Datenverarbeitungsvorrichtung 50 kann dazu ausgeführt sein, in einem Netzwerk 60 (wie eine Cloud 60 und/oder das Internet 60) eine Routensammlung 230 bereitzustellen, insbesondere dort bekanntzumachen oder zu veröffentlichen. Diese Routensammlung 230 kann über die Straßenausstattungseinrichtung 10 und/oder über ein Mobilfunkgerät 15 oder auch weitere Geräte zugänglich sein. Hierzu kann über die Geräte direkt auf die Datenverarbeitungsvorrichtung 50 zugegriffen werden oder auch indirekt über wenigstens eine weitere Datenverarbeitungsvorrichtung 65 der Zugang ermöglicht sein.

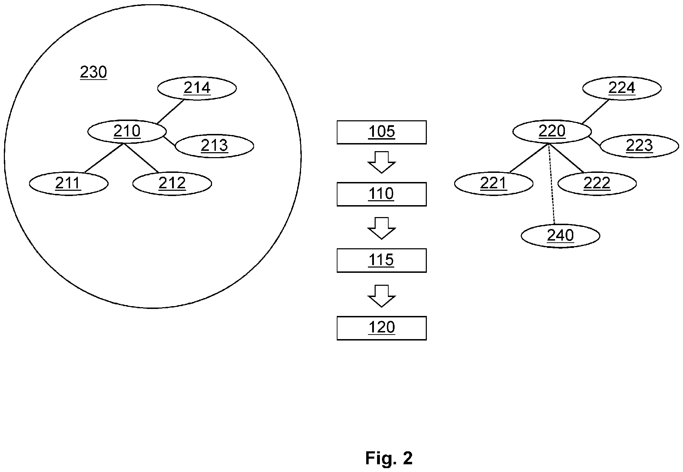

Die Routensammlung 230 kann unterschiedliche Routeninformationen 210 aufweisen, die jeweils zumindest für einen Startort 211 und einen Zielort 212 und eine Zeitinformation 213 und ein Fahrzeug 214 spezifisch sind, welche einer angebotenen Route zugeordnet werden (vgl. Figur 2). Der Startort 211 ist in Figur 1 beispielhaft an der Ladevorrichtung 12 vorgesehen und der Zielort 212 an einem davon entfernten Standort. Ein Benutzer 1 kann nun an der Ladevorrichtung 12 (alternativ auch an einer anderen Straßenausstattungseinrichtung 10) über eine Erfassungsvorrichtung 30 eine Erfassung 105 einer Eingabeinformation 220 durchführen. Die Eingabeinformation 220 ist bspw. für einen Wunschstartort 221 und einen Wunschzielort 222 und eine Wunschzeitinformation 223 und eine Fahrzeuganforderung 224 spezifisch. Diese Daten können einer (von dem Benutzer 1) gewünschten Route zugeordnet werden. Anschließend kann die Eingabeinformation 220 über die Übertragungsvorrichtung 40 an die Datenverarbeitungsvorrichtung 50 übersendet werden. Diese Erfassung 105 und Übersendung 110 kann alternativ oder zusätzlich auch durch ein weiteres Gerät wie ein Mobilfunkgerät 15 durchgeführt werden. Für die Ausführung der Erfassung 105 und Übersendung 110 kann die Straßenausstattungseinrichtung 10 oder das entsprechende Gerät ein erfindungsgemäßes Computerprogramm 310 aufweisen, welches durch ein Datenverarbeitungsmittel 16 ausgeführt wird.

Anschließend kann durch ein Computerprogramm 320 der Datenverarbeitungsvorrichtung 50 eine Verarbeitung 115, insbesondere ein Vergleich 115, der übersendeten Eingabeinformation 220 mit den Routeninformationen 210 in der Routensammlung 230 erfolgen, um wenigstens eine Übereinstimmung und/oder Zuweisung der gewünschten Route und der angebotenen Routen zu ermitteln. Dies ermöglicht die anschließende Durchführung einer Koordinierung 120 von Fahrzeugen 214 anhand eines Ergebnisses der Verarbeitung 115 bzw. des Vergleichs 115. Für die Koordinierung 120 kann es vorgesehen sein, dass die Datenverarbeitungsvorrichtung 50 (bspw. ebenfalls über Funksignale) wenigstens ein Fahrzeug 214 abhängig von dem Ergebnis der Verarbeitung 115 ansteuert.

In Figur 2 ist schematisch ein erfindungsgemäßes Verfahren zur Koordinierung 120 von Fahrzeugen 214 dargestellt. Nachdem das Bereitstellen der Routensammlung 230 erfolgt ist, kann die Erfassung 105 der Eingabeinformation 220 durchgeführt werden. Die Eingabeinformation 220 kann als Datensatz den Wunschstartort 221 und den Wunschzielort 222 und die Wunschzeitinformation 223 und die Fahrzeuganforderung 224 aufweisen. Auch kann die Eingabeinformation 220 eine Identitätsinformation 240 aufweisen, welche einen Hinweis auf die Identität der Person gibt, welche die Eingabeinformation 220 eingibt. Anschließend kann eine Übersendung 110 der Eingabeinformation 220 an die Datenverarbeitungsvorrichtung 50 erfolgen. Durch die Datenverarbeitungsvorrichtung 50 kann sodann die Verarbeitung 115 durchgeführt werden. Die Verarbeitung 115 umfasst insbesondere einen Vergleich 115 der übersendeten Eingabeinformation 220 mit den Routeninformationen 210 in der Routensammlung 230, um wenigstens eine Übereinstimmung und/oder Zuweisung der gewünschten Route und der angebotenen Routen zu ermitteln. Anschließend kann ein Durchführen der Koordinierung 120 anhand eines Ergebnisses der Verarbeitung 115 bzw. des Vergleichs 115 stattfinden.

Ferner ist vorgesehen, dass zumindest die Schritte der Erfassung 105 und/oder Übersendung 110 durch eine Straßenlaterne 11 durchgeführt werden. Zusätzlich kann es vorgesehen sein, dass zumindest die Schritte der Erfassung 105 und/oder Übersendung 110 durch ein tragbares Mobilfunkgerät 15 oder eine Straßenausstattungseinrichtung 10 durchgeführt werden. Die Straßenausstattungseinrichtung 10 kann zumindest eine der nachfolgenden Einrichtungen umfassen, wie in Figur 1 nur schematisch gezeigt wird:
- eine Straßenbeleuchtungsvorrichtung 11, insbesondere eine Straßenleuchte, vorzugsweise eine Straßenlaterne 11,
- eine Ladevorrichtung 12, insbesondere eine Ladestation 12 für Elektrofahrzeuge,
- ein Verkehrszeichen,
- ein Teil eines Fahrzeugrückhaltesystems,
- eine Einrichtung zur Wegweisung,
- eine Lichtzeichenanlage.

Das Bereitstellen der Routensammlung 230 kann dadurch erfolgen, dass die Routeninformationen 210 für unterschiedliche Startorte 211 und/oder Zielorte 212 und/oder Zeitinformationen 213 und/oder Fahrzeuge 214 eingegeben werden, vorzugsweise über unterschiedliche Straßenausstattungseinrichtungen 10. Aus Figur 1 wird in diesem Zusammenhang ebenfalls der weitere Vorteil deutlich, dass bei der Eingabe der Startort 211 oder der Zielort 212 der Routeninformation 210 automatisch anhand eines Ortes der für die Eingabe verwendeten Straßenausstattungseinrichtung 10 festgelegt werden kann. Ebenfalls ist es denkbar, dass die Erfassung 105 durch eine Straßenausstattungseinrichtung 10 durchgeführt wird, wobei der Wunschstartort 221 oder der Wunschzielort 222 der Eingabeinformation 220 automatisch anhand eines Standortes der Straßenausstattungseinrichtung 10 festgelegt wird. Damit kann automatisch und komfortabel die Information über den Standort der Straßenausstattungseinrichtung 10 bei der Eingabe und/oder Erfassung 105 genutzt werden. Dies kann z. B. auch in der Form erfolgen, dass die Datenverarbeitungsvorrichtung 50 beim Empfang der Eingabeinformation 220 oder der eingegebenen Routeninformation 210 von der Straßenausstattungseinrichtung 10 die entsprechende Information über den Standort der Straßenausstattungseinrichtung 10 ergänzt.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 1: Benutzer

- 10: Straßenausstattungseinrichtung
- 11: Straßenbeleuchtungsvorrichtung, Straßenlaterne
- 12: Ladevorrichtung, Ladestation
- 15: Mobilfunkgerät
- 16: Datenverarbeitungsmittel

- 30: Erfassungsvorrichtung

- 40: Übertragungsvorrichtung

- 50: Datenverarbeitungsvorrichtung

- 60: Netzwerk, Cloud, Internet
- 65: weitere Datenverarbeitungsvorrichtung

- 105: Erfassung
- 110: Übersendung
- 115: Verarbeitung, Vergleich

- 120: Koordinierung

- 210: Routeninformation
- 211: Startort, Ausgangsort
- 212: Zielort
- 213: Zeitinformation
- 214: Fahrzeug

- 220: Eingabeinformation
- 221: Wunschstartort
- 222: Wunschzielort
- 223: Wunschzeitinformation
- 224: Fahrzeuganforderung
- 230: Routensammlung

- 240: Identitätsinformation

- 310: Computerprogramm
- 320: Computerprogramm

## Patentansprüche

1. Verfahren zur Koordinierung (120) von Fahrzeugen (214),
wobei die nachfolgenden Schritte durchgeführt werden:
- Bereitstellen einer Routensammlung (230), wobei die Routensammlung (230) unterschiedliche Routeninformationen (210) aufweist, die jeweils zumindest für einen Startort (211) und einen Zielort (212) und eine Zeitinformation (213) und ein Fahrzeug (214) spezifisch sind, welche einer angebotenen Route zugeordnet sind,
- Durchführen einer Erfassung (105) einer Eingabeinformation (220), welche zumindest für einen Wunschstartort (221) und einen Wunschzielort (222) und eine Wunschzeitinformation (223) und eine Fahrzeuganforderung (224) spezifisch ist, welche einer gewünschten Route zugeordnet werden,
- Durchführen einer Übersendung (110) der Eingabeinformation (220) an eine Datenverarbeitungsvorrichtung (50),
- Durchführen einer Verarbeitung (115) der übersendeten Eingabeinformation (220) und der Routeninformationen (210) in der Routensammlung (230), um wenigstens eine Übereinstimmung und/oder Zuweisung der gewünschten Route zu den angebotenen Routen zu ermitteln,
- Durchführen der Koordinierung (120) anhand eines Ergebnisses der Verarbeitung (115),
**dadurch gekennzeichnet, dass**
das Bereitstellen der Routensammlung (230) dadurch erfolgt, dass die Routeninformationen (210) für unterschiedliche Startorte (211) und/oder Zielorte (212) und/oder Zeitinformationen (213) und/oder Fahrzeuge (214) eingegeben werden über unterschiedliche Straßenausstattungseinrichtungen (10), wobei die Erfassung (105) durch eine Straßenausstattungseinrichtung (10) durchgeführt wird, wobei der Wunschstartort (221) oder der Wunschzielort (222) der Eingabeinformation (220) automatisch anhand eines Orts der Straßenausstattungseinrichtung (10) festgelegt wird.

2. Verfahren nach Anspruch 1,
**dadurch gekennzeichnet,**
**dass** zumindest die Schritte der Erfassung (105) und/oder Übersendung (110) durch eine Straßenlaterne (11) durchgeführt werden, und/oder dass zumindest die Schritte der Erfassung (105) und/oder Übersendung (110) durch ein tragbares Mobilfunkgerät (15) oder eine Straßenausstattungseinrichtung (10) durchgeführt werden.

3. Verfahren nach Anspruch 2,
**dadurch gekennzeichnet,**
**dass** die Straßenausstattungseinrichtung (10) zumindest eine der nachfolgenden Einrichtungen umfasst:
- eine Straßenbeleuchtungsvorrichtung (11), insbesondere eine Straßenleuchte, vorzugsweise eine Straßenlaterne (11),
- eine Ladevorrichtung (12), insbesondere eine Ladestation (12) für Elektrofahrzeuge,
- ein Verkehrszeichen,
- ein Teil eines Fahrzeugrückhaltesystems,
- eine Einrichtung zur Wegweisung,
- eine Lichtzeichenanlage.

4. Verfahren nach Anspruch 1,
**dadurch gekennzeichnet,**
**dass** bei der Eingabe der Startort (211) oder der Zielort (212) der Routeninformation (210) automatisch anhand eines Orts der für die Eingabe verwendeten Straßenausstattungseinrichtung (10) festgelegt wird.

5. Verfahren nach einem der vorhergehenden Ansprüche,
**dadurch gekennzeichnet,**
**dass** das Durchführen der Erfassung (105) der Eingabeinformation (220) durch eine Erfassungsvorrichtung (30) durchgeführt wird, wobei die Erfassungsvorrichtung (30) zur Übertragung von Vorgabedaten in Datenverbindung mit einer Datenverarbeitungsanlage steht, um den Wunschstartort (221) und/oder den Wunschzielort (222) und/oder die Wunschzeitinformation (223) und/oder die Fahrzeuganforderung (224) automatisch vorgegeben anhand der Vorgabedaten einzustellen.

6. Verfahren nach einem der vorhergehenden Ansprüche,
**dadurch gekennzeichnet,**
**dass** bei dem Durchführen der Erfassung (105) der Eingabeinformation (220) eine Identitätsinformation (240) erfasst wird und bei dem Durchführen der Verarbeitung (115) zumindest der Wunschzielort (222) und/oder die Fahrzeuganforderung (224) und/oder die Identitätsinformation (240) mit einer Prioritätsvorgabe verglichen werden, um abhängig von dem Vergleich (115) mit der Prioritätsvorgabe die Ermittlung der Übereinstimmung und/oder Zuweisung und/oder die Koordinierung (120) zu priorisieren.

7. Verfahren nach einem der vorhergehenden Ansprüche,
**dadurch gekennzeichnet,**
**dass** die nachfolgenden Schritte zur Bereitstellung der Routensammlung (230) durchgeführt werden:
- Eingeben einer Identitätsinformation (240),
- Registrieren eines Fahrzeuges (214),
- Eingeben zumindest des Startorts (211) und des Zielorts (212) und der Zeitinformation (213), um eine neue Routeninformation (210) zu erhalten,
- Zuordnen der neuen Routeninformation (210) zum registrierten Fahrzeug (214) und zur Identitätsinformation (240).

8. Verfahren nach einem der vorhergehenden Ansprüche,
**dadurch gekennzeichnet,**
**dass** das Durchführen der Koordinierung (120) wenigstens eine der nachfolgenden Aktionen umfassen:
- eine Ansteuerung eines Navigationssystems wenigstens eines Fahrzeuges (214), um eine Zielführung für das Fahrzeug (214) einzustellen und/oder zu initiieren,
- eine Anpassung einer Verkehrslenkung,
- eine Parametrisierung wenigstens eines autonomen Fahrzeuges (214), vorzugsweise eine Routeneinstellung für das autonome Fahrzeug (214),
- eine Anpassung von Fahrzeugdaten für das Fahrzeug (214) der Routeninformation (210) anhand der Fahrzeuganforderung (224), insbesondere eine Anpassung der verfügbaren Sitzplätze des Fahrzeuges (214),
- eine Bereitstellung von Analysedaten anhand der zugewiesenen und/oder übereinstimmenden Routen.

9. Verfahren nach einem der vorhergehenden Ansprüche,
**dadurch gekennzeichnet,**
**dass** die Routensammlung (230) durch eine Datenbank bereitgestellt ist, wobei die unterschiedlichen Routeninformationen (210) jeweils den Startort (211) und den Zielort (212) und die Zeitinformation (213) und das Fahrzeug (214) als Datensatz der Datenbank zur Bekanntmachung der angebotenen Route aufweisen.

10. Verfahren nach einem der vorhergehenden Ansprüche,
**dadurch gekennzeichnet,**
**dass** die Datenverarbeitungsvorrichtung (50) mit einer Vielzahl von Straßenausstattungseinrichtungen (10) in Datenverbindung steht, um dort die Routeninformationen (210) bereitzustellen.

11. Verfahren nach einem der vorhergehenden Ansprüche,
**dadurch gekennzeichnet,**
**dass** die Routeninformationen (210) jeweils
- dadurch für das Fahrzeug (214) spezifisch ist, dass die Routeninformation (210) eine Angabe über Fahrzeugeigenschaften umfasst, welche der angebotenen Route zugeordnet sind, und/oder
- dadurch für einen Startort (211) spezifisch ist, dass die Routeninformation (210) eine Ortsangabe umfasst, an welchem Ort die Route mit dem Fahrzeug (214) beginnt, und/oder
- dadurch für einen Zielort (212) spezifisch ist, dass die Routeninformation (210) eine Ortsangabe umfasst, an welchem Ort die Route mit dem Fahrzeug (214) endet, und/oder
- dadurch für die Zeitinformation (213) spezifisch ist, dass die Routeninformation (210) eine Zeitangabe über den Beginn und/oder die Dauer der Route aufweist.

12. Verfahren nach einem der vorhergehenden Ansprüche,
**dadurch gekennzeichnet,**
**dass** das Durchführen einer Übersendung (110) der Eingabeinformation (220) über eine Funkverbindung, insbesondere über ein Mobilfunknetz, durchgeführt wird.

13. Verfahren nach einem der vorhergehenden Ansprüche,
**dadurch gekennzeichnet,**
**dass** das Durchführen der Verarbeitung (115) der übersendeten Eingabeinformation (220) mit den Routeninformationen (210) in der Routensammlung (230) dadurch erfolgt, dass eine angebotene Route nach den folgenden Kriterien gesucht wird:
- **dass** die angebotene Route einen Startort (211) aufweist oder durch einen Ort führt, welcher innerhalb einer vordefinierten Toleranz mit dem Wunschstartort (221) der gewünschten Route übereinstimmt,
- **dass** die angebotene Route einen Zielort (212) aufweist oder durch einen Ort führt, welcher innerhalb einer vordefinierten Toleranz mit dem Wunschzielort (222) der gewünschten Route übereinstimmt,
- **dass** die angebotene Route eine Zeitinformation (213) aufweist, welche mit der Wunschzeitinformation (223) innerhalb einer vordefinierten Toleranz übereinstimmt,
- **dass** die angebotene Route ein Fahrzeug (214) bereitstellt und/oder eine Transportkapazität des Fahrzeuges (214) bereitstellt, welche mit der Fahrzeuganforderung (224) innerhalb einer vordefinierten Toleranz übereinstimmt, sodass anhand der Suche wenigstens eine übereinstimmende Route ermittelt wird.

14. Straßenausstattungseinrichtung (10) zur Ausführung eines Verfahrens nach einem der vorhergehenden Ansprüche, aufweisend:
- eine Erfassungsvorrichtung (30) zum Durchführen einer Erfassung (105) einer Eingabeinformation (220), welche zumindest für einen Wunschstartort (221) und einen Wunschzielort (222) und eine Wunschzeitinformation (223) und eine Fahrzeuganforderung (224) spezifisch ist, welche einer gewünschten Route zugeordnet werden,
- eine Übertragungsvorrichtung (40) zum Durchführen einer Übersendung (110) der Eingabeinformation (220) an eine Datenverarbeitungsvorrichtung (50), um eine Verarbeitung (115) der übersendeten Eingabeinformation (220) und unterschiedlichen Routeninformationen (210) in einer Routensammlung (230) zu initiieren, durch welche wenigstens eine Übereinstimmung und/oder Zuweisung der gewünschten Route zu angebotenen Routen ermittelbar ist, und um eine Koordinierung (120) von Fahrzeugen (214) anhand eines Ergebnisses der Verarbeitung (115) zu initiieren, wobei die Routensammlung (230) die unterschiedlichen Routeninformationen (210) aufweist, die jeweils zumindest für einen Startort (211) und einen Zielort (212) und eine Zeitinformation (213) und ein Fahrzeug (214) spezifisch sind, welche der angebotenen Route zugeordnet sind.

15. System zur Ausführung eines Verfahrens nach einem der Ansprüche 1 bis 13, aufweisend
- eine Straßenausstattungseinrichtung (10) nach Anspruch 14,
- eine Datenverarbeitungsvorrichtung (50) zur Bereitstellung der Routensammlung (230) und zur Durchführung der Verarbeitung (115) und der Koordinierung (120).

16. Computerprogramm (310) zur Ausführung eines Verfahrens nach einem der Ansprüche 1 bis 13, umfassend Befehle, die bei der Ausführung durch wenigstens ein Datenverarbeitungsmittel (16) dieses veranlassen, die nachfolgenden Schritte durchzuführen:
- Durchführen einer Erfassung (105) einer Eingabeinformation (220), welche zumindest für einen Wunschstartort (221) und einen Wunschzielort (222) und eine Wunschzeitinformation (223) und eine Fahrzeuganforderung (224) spezifisch ist, welche einer gewünschten Route zugeordnet werden,
- Durchführen einer Übersendung (110) der Eingabeinformation (220) an wenigstens eine Datenverarbeitungsvorrichtung (50), um eine Verarbeitung (115) der übersendeten Eingabeinformation (220) und unterschiedlichen Routeninformationen (210) in einer Routensammlung (230) zu initiieren, durch welche wenigstens eine Übereinstimmung und/oder Zuweisung der gewünschten Route zu angebotenen Routen ermittelbar ist, und um eine Koordinierung (120) von Fahrzeugen (214) anhand eines Ergebnisses der Verarbeitung (115) zu initiieren, wobei die Routensammlung (230) die unterschiedlichen Routeninformationen (210) aufweist, die jeweils zumindest für einen Startort (211) und einen Zielort (212) und eine Zeitinformation (213) und ein Fahrzeug (214) spezifisch sind, welche der angebotenen Route zugeordnet sind.

17. Computerprogramm (320) zur Ausführung eines Verfahrens nach einem der Ansprüche 1 bis 13, umfassend Befehle, die bei der Ausführung durch wenigstens eine Datenverarbeitungsvorrichtung (50) diese veranlassen, die nachfolgenden Schritte durchzuführen:
- Bereitstellen einer Routensammlung (230), wobei die Routensammlung (230) unterschiedliche Routeninformationen (210) aufweist, die jeweils zumindest für einen Startort (211) und einen Zielort (212) und eine Zeitinformation (213) und ein Fahrzeug (214) spezifisch sind, welche einer angebotenen Route zugeordnet sind,
- Empfangen einer erfassten Eingabeinformation (220), welche zumindest für einen Wunschstartort (221) und einen Wunschzielort (222) und eine Wunschzeitinformation (223) und eine Fahrzeuganforderung (224) spezifisch ist, welche einer gewünschten Route zugeordnet sind,
- Durchführen einer Verarbeitung (115) der empfangenen Eingabeinformation (220) und der Routeninformationen (210) in der Routensammlung (230), um wenigstens eine Übereinstimmung und/oder Zuweisung der gewünschten Route zu den angebotenen Routen zu ermitteln,
- Initiieren einer Koordinierung (120) von Fahrzeugen (214) anhand eines Ergebnisses der Verarbeitung (115).

## Claims

1. A method for coordinating (120) vehicles (214),
wherein the following steps are carried out:
- providing a route collection (230), wherein the route collection (230) comprises different pieces of route information (210), each of which is specific at least to a starting location (211) and a destination location (212) and time information (213) and a vehicle (214), which are associated with an offered route,
- carrying out an acquisition (105) of input information (220), which is specific at least to a desired starting location (221) and a desired destination location (222) and desired time information (223) and a vehicle requirement (224), which are associated with a desired route,
- carrying out a transmission (110) of the input information (220) to a data processing device (50),
- carrying out a processing (115) of the transmitted input information (220) and of the route information (210) in the route collection (230), in order to determine at least one match and/or assignment of the desired route to the offered routes,
- carrying out the coordination (120) on the basis of a result of the processing (115),
**characterized in that** the provision of the route collection (230) is carried out **in that** the route information (210) for different starting locations (211) and/or destination locations (212) and/or time information (213) and/or vehicles (214) is input via different roadside equipment facilities (10), wherein the acquisition (105) is carried out by a roadside equipment facility (10), wherein the desired starting location (221) or the desired destination location (222) of the input information (220) is automatically determined on the basis of a location of the roadside equipment facility (10).

2. The method according to claim 1, **characterized in that** at least the steps of the acquisition (105) and/or transmission (110) are carried out by a street lamp (11), and/or in that at least the steps of the acquisition (105) and/or transmission (110) are carried out by a portable mobile radio device (15) or a roadside equipment facility (10).

3. The method according to claim 2, **characterized in that** the roadside equipment facility (10) comprises at least one of the following facilities:
- a street lighting device (11), in particular a street light, preferably a street lamp (11),
- a charging device (12), in particular a charging station (12) for electric vehicles,
- a traffic sign,
- a part of a vehicle restraint system,
- a wayfinding facility,
- a traffic light system.

4. The method according to claim 1, **characterized in that**, when the starting location (211) or the destination location (212) of the route information (210) is input, it is automatically determined on the basis of a location of the roadside equipment facility (10) used for the input.

5. The method according to any one of the preceding claims, **characterized in that** the carrying out of the acquisition (105) of the input information (220) is carried out by an acquisition device (30), wherein the acquisition device (30) is in data communication with a data processing system for transmitting specification data, in order to automatically set the desired starting location (221) and/or the desired destination location (222) and/or the desired time information (223) and/or the vehicle requirement (224) on the basis of the specification data.

6. The method according to any one of the preceding claims, **characterized in that**, when carrying out the acquisition (105) of the input information (220), identity information (240) is acquired and, when carrying out the processing (115), at least the desired destination location (222) and/or the vehicle requirement (224) and/or the identity information (240) are compared with a priority specification, in order, depending on the comparison (115) with the priority specification, to prioritize the determination of the match and/or assignment and/or the coordination (120).

7. The method according to any one of the preceding claims, **characterized in that** the following steps are carried out for providing the route collection (230):
- inputting identity information (240),
- registering a vehicle (214),
- inputting at least the starting location (211) and the destination location (212) and the time information (213), in order to obtain new route information (210),
- assigning the new route information (210) to the registered vehicle (214) and to the identity information (240).

8. The method according to any one of the preceding claims, **characterized in that** carrying out the coordination (120) comprises at least one of the following actions:
- controlling a navigation system of at least one vehicle (214), in order to set and/or initiate destination guidance for the vehicle (214),
- adapting traffic control,
- parameterizing at least one autonomous vehicle (214), preferably setting a route for the autonomous vehicle (214),
- adapting vehicle data for the vehicle (214) of the route information (210) on the basis of the vehicle requirement (224), in particular adapting the available seats of the vehicle (214),
- providing analysis data on the basis of the assigned and/or matching routes.

9. The method according to any one of the preceding claims, **characterized in that** the route collection (230) is provided by a database, wherein the different pieces of route information (210) each comprise the starting location (211) and the destination location (212) and the time information (213) and the vehicle (214) as a data record of the database for announcing the offered route.

10. The method according to any one of the preceding claims, **characterized in that** the data processing device (50) is in data communication with a plurality of roadside equipment facilities (10), in order to provide the route information (210) there.

11. The method according to any one of the preceding claims, **characterized in that** the route information (210) is in each case
- specific to the vehicle (214) **in that** the route information (210) comprises an indication concerning vehicle properties associated with the offered route, and/or
- specific to a starting location (211) **in that** the route information (210) comprises a location indication of the location at which the route with the vehicle (214) begins, and/or
- specific to a destination location (212) **in that** the route information (210) comprises a location indication of the location at which the route with the vehicle (214) ends, and/or
- specific to the time information (213) **in that** the route information (210) comprises a time indication concerning the beginning and/or duration of the route.

12. The method according to any one of the preceding claims, **characterized in that** carrying out a transmission (110) of the input information (220) is carried out via a radio connection, in particular via a mobile radio network.

13. The method according to any one of the preceding claims, **characterized in that** carrying out the processing (115) of the transmitted input information (220) with the route information (210) in the route collection (230) is carried out **in that** an offered route is searched for according to the following criteria:
- that the offered route has a starting location (211) or passes through a location which matches the desired starting location (221) of the desired route within a predefined tolerance,
- that the offered route has a destination location (212) or passes through a location which matches the desired destination location (222) of the desired route within a predefined tolerance,
- that the offered route has time information (213) which matches the desired time information (223) within a predefined tolerance,
- that the offered route provides a vehicle (214) and/or provides a transport capacity of the vehicle (214) which matches the vehicle requirement (224) within a predefined tolerance,
such that at least one matching route is determined on the basis of the search.

14. A roadside equipment facility (10) for carrying out a method according to any one of the preceding claims, comprising:
- an acquisition device (30) for carrying out an acquisition (105) of input information (220), which is specific at least to a desired starting location (221) and a desired destination location (222) and desired time information (223) and a vehicle requirement (224), which are associated with a desired route,
- a transmission device (40) for carrying out a transmission (110) of the input information (220) to a data processing device (50), in order to initiate a processing (115) of the transmitted input information (220) and different pieces of route information (210) in a route collection (230), by means of which at least one match and/or assignment of the desired route to offered routes can be determined, and in order to initiate a coordination (120) of vehicles (214) on the basis of a result of the processing (115), wherein the route collection (230) comprises the different pieces of route information (210), each of which is specific at least to a starting location (211) and a destination location (212) and time information (213) and a vehicle (214), which are associated with the offered route.

15. A system for carrying out a method according to any one of claims 1 to 13, comprising
- a roadside equipment facility (10) according to claim 14,
- a data processing device (50) for providing the route collection (230) and for carrying out the processing (115) and the coordination (120).

16. A computer program (310) for carrying out a method according to any one of claims 1 to 13, comprising instructions which, when executed by at least one data processing means (16), cause the latter to carry out the following steps:
- carrying out an acquisition (105) of input information (220), which is specific at least to a desired starting location (221) and a desired destination location (222) and desired time information (223) and a vehicle requirement (224), which are associated with a desired route,
- carrying out a transmission (110) of the input information (220) to at least one data processing device (50), in order to initiate a processing (115) of the transmitted input information (220) and different pieces of route information (210) in a route collection (230), by means of which at least one match and/or assignment of the desired route to offered routes can be determined, and in order to initiate a coordination (120) of vehicles (214) on the basis of a result of the processing (115), wherein the route collection (230) comprises the different pieces of route information (210), each of which is specific at least to a starting location (211) and a destination location (212) and time information (213) and a vehicle (214), which are associated with the offered route.

17. A computer program (320) for carrying out a method according to any one of claims 1 to 13, comprising instructions which, when executed by at least one data processing device (50), cause the latter to carry out the following steps:
- providing a route collection (230), wherein the route collection (230) comprises different pieces of route information (210), each of which is specific at least to a starting location (211) and a destination location (212) and time information (213) and a vehicle (214), which are associated with an offered route,
- receiving acquired input information (220), which is specific at least to a desired starting location (221) and a desired destination location (222) and desired time information (223) and a vehicle requirement (224), which are associated with a desired route,
- carrying out a processing (115) of the received input information (220) and of the route information (210) in the route collection (230), in order to determine at least one match and/or assignment of the desired route to the offered routes,
- initiating a coordination (120) of vehicles (214) on the basis of a result of the processing (115).

## Revendications

1. Procédé de coordination (120) de véhicules (214),
dans lequel les étapes suivantes sont mises en œuvre :
mise à disposition d'un ensemble de routes (230), l'ensemble de routes (230) comprenant différentes informations d'itinéraire (210), chacune étant spécifique au moins à un lieu de départ (211) et à un lieu de destination (212) et à une information temporelle (213) et à un véhicule (214), qui sont associés à une route offerte,
mise en œuvre d'une acquisition (105) d'une information d'entrée (220), qui est spécifique au moins à un lieu de départ souhaité (221) et à un lieu de destination souhaité (222) et à une information temporelle souhaitée (223) et à une exigence relative au véhicule (224), qui sont associés à une route souhaitée,
mise en œuvre d'une transmission (110) de l'information d'entrée (220) à un dispositif de traitement de données (50),
mise en œuvre d'un traitement (115) de l'information d'entrée (220) transmise et des informations d'itinéraire (210) dans l'ensemble de routes (230), afin de déterminer au moins une concordance et/ou une attribution de la route souhaitée aux routes offertes,
mise en œuvre de la coordination (120) sur la base d'un résultat du traitement (115),
**caractérisé en ce que** la mise à disposition de l'ensemble de routes (230) est réalisée **en ce que** les informations d'itinéraire (210) pour différents lieux de départ (211) et/ou lieux de destination (212) et/ou informations temporelles (213) et/ou véhicules (214) sont saisies par l'intermédiaire de différents équipements routiers (10), l'acquisition (105) étant réalisée par un équipement routier (10), le lieu de départ souhaité (221) ou le lieu de destination souhaité (222) de l'information d'entrée (220) étant déterminé automatiquement sur la base d'un emplacement de l'équipement routier (10).

2. Procédé selon la revendication 1, **caractérisé en ce qu'**au moins les étapes de l'acquisition (105) et/ou de la transmission (110) sont réalisées par une lampe de rue (11), et/ou **en ce qu'**au moins les étapes de l'acquisition (105) et/ou de la transmission (110) sont réalisées par un appareil de radiocommunication mobile portable (15) ou un équipement routier (10).

3. Procédé selon la revendication 2, **caractérisé en ce que** l'équipement routier (10) comprend au moins l'un des équipements suivants :
un dispositif d'éclairage de rue (11), notamment un éclairage de rue, de préférence une lampe de rue (11),
un dispositif de recharge (12), notamment une station de recharge (12) pour véhicules électriques,
un panneau de signalisation,
une partie d'un système de retenue de véhicule,
un dispositif de guidage,
une installation de signalisation lumineuse.

4. Procédé selon la revendication 1, **caractérisé en ce que**, lors de la saisie du lieu de départ (211) ou du lieu de destination (212) de l'information d'itinéraire (210), celui-ci est déterminé automatiquement sur la base d'un emplacement de l'équipement routier (10) utilisé pour la saisie.

5. Procédé selon l'une quelconque des revendications précédentes, **caractérisé en ce que** la mise en œuvre de l'acquisition (105) de l'information d'entrée (220) est réalisée par un dispositif d'acquisition (30), le dispositif d'acquisition (30) étant en liaison de données avec un système de traitement de données pour transmettre des données de spécification, afin de régler automatiquement le lieu de départ souhaité (221) et/ou le lieu de destination souhaité (222) et/ou l'information temporelle souhaitée (223) et/ou l'exigence relative au véhicule (224) sur la base des données de spécification.

6. Procédé selon l'une quelconque des revendications précédentes, **caractérisé en ce que**, lors de la mise en œuvre de l'acquisition (105) de l'information d'entrée (220), une information d'identité (240) est acquise et, lors de la mise en œuvre du traitement (115), au moins le lieu de destination souhaité (222) et/ou l'exigence relative au véhicule (224) et/ou l'information d'identité (240) sont comparés à une spécification de priorité afin, en fonction de la comparaison (115) avec la spécification de priorité, de prioriser la détermination de la concordance et/ou de l'attribution et/ou de la coordination (120).

7. Procédé selon l'une quelconque des revendications précédentes, **caractérisé en ce que** les étapes suivantes sont mises en œuvre pour mettre à disposition l'ensemble de routes (230) :
saisie d'une information d'identité (240),
enregistrement d'un véhicule (214),
saisie au moins du lieu de départ (211) et du lieu de destination (212) et de l'information temporelle (213), afin d'obtenir une nouvelle information d'itinéraire (210),
attribution de la nouvelle information d'itinéraire (210) au véhicule enregistré (214) et à l'information d'identité (240).

8. Procédé selon l'une quelconque des revendications précédentes, **caractérisé en ce que** la mise en œuvre de la coordination (120) comprend au moins l'une des actions suivantes :
commande d'un système de navigation d'au moins un véhicule (214), afin de régler et/ou d'initier un guidage vers une destination pour le véhicule (214),
adaptation d'une régulation du trafic,
paramétrage d'au moins un véhicule autonome (214), de préférence réglage d'un itinéraire pour le véhicule autonome (214),
adaptation de données de véhicule pour le véhicule (214) de l'information d'itinéraire (210) sur la base de l'exigence relative au véhicule (224), notamment adaptation des places assises disponibles du véhicule (214),
mise à disposition de données d'analyse sur la base des routes attribuées et/ou concordantes.

9. Procédé selon l'une quelconque des revendications précédentes, **caractérisé en ce que** l'ensemble de routes (230) est mis à disposition par une base de données, les différentes informations d'itinéraire (210) comprenant chacune le lieu de départ (211) et le lieu de destination (212) et l'information temporelle (213) et le véhicule (214) en tant qu'enregistrement de données de la base de données destiné à faire connaître la route offerte.

10. Procédé selon l'une quelconque des revendications précédentes, **caractérisé en ce que** le dispositif de traitement de données (50) est en liaison de données avec une pluralité d'équipements routiers (10), afin d'y mettre à disposition les informations d'itinéraire (210).

11. Procédé selon l'une quelconque des revendications précédentes, **caractérisé en ce que** les informations d'itinéraire (210) sont respectivement
spécifiques au véhicule (214) **en ce que** l'information d'itinéraire (210) comprend une indication concernant des propriétés de véhicule associées à la route offerte, et/ou
spécifiques à un lieu de départ (211) **en ce que** l'information d'itinéraire (210) comprend une indication de lieu du lieu auquel la route avec le véhicule (214) commence, et/ou
spécifiques à un lieu de destination (212) **en ce que** l'information d'itinéraire (210) comprend une indication de lieu du lieu auquel la route avec le véhicule (214) se termine, et/ou
spécifiques à l'information temporelle (213) **en ce que** l'information d'itinéraire (210) présente une indication temporelle concernant le début et/ou la durée de la route.

12. Procédé selon l'une quelconque des revendications précédentes, **caractérisé en ce que** la mise en œuvre d'une transmission (110) de l'information d'entrée (220) est réalisée par l'intermédiaire d'une liaison radio, notamment par l'intermédiaire d'un réseau de radiocommunication mobile.

13. Procédé selon l'une quelconque des revendications précédentes, **caractérisé en ce que** la mise en œuvre du traitement (115) de l'information d'entrée transmise (220) avec les informations d'itinéraire (210) dans l'ensemble de routes (230) est réalisée **en ce qu'**une route offerte est recherchée selon les critères suivants :
que la route offerte présente un lieu de départ (211) ou passe par un lieu qui concorde, dans une tolérance prédéfinie, avec le lieu de départ souhaité (221) de la route souhaitée,
que la route offerte présente un lieu de destination (212) ou passe par un lieu qui concorde, dans une tolérance prédéfinie, avec le lieu de destination souhaité (222) de la route souhaitée,
que la route offerte présente une information temporelle (213) qui concorde avec l'information temporelle souhaitée (223) dans une tolérance prédéfinie,
que la route offerte mette à disposition un véhicule (214) et/ou mette à disposition une capacité de transport du véhicule (214) qui concorde avec l'exigence relative au véhicule (224) dans une tolérance prédéfinie,
de sorte qu'au moins une route concordante est déterminée sur la base de la recherche.

14. Équipement routier (10) destiné à mettre en œuvre un procédé selon l'une quelconque des revendications précédentes, comprenant :
un dispositif d'acquisition (30) destiné à mettre en œuvre une acquisition (105) d'une information d'entrée (220), qui est spécifique au moins à un lieu de départ souhaité (221) et à un lieu de destination souhaité (222) et à une information temporelle souhaitée (223) et à une exigence relative au véhicule (224), qui sont associés à une route souhaitée,
un dispositif de transmission (40) destiné à mettre en œuvre une transmission (110) de l'information d'entrée (220) à un dispositif de traitement de données (50), afin d'initier un traitement (115) de l'information d'entrée transmise (220) et de différentes informations d'itinéraire (210) dans un ensemble de routes (230), par lequel au moins une concordance et/ou une attribution de la route souhaitée à des routes offertes peut être déterminée, et afin d'initier une coordination (120) de véhicules (214) sur la base d'un résultat du traitement (115), l'ensemble de routes (230) comprenant les différentes informations d'itinéraire (210), chacune étant spécifique au moins à un lieu de départ (211) et à un lieu de destination (212) et à une information temporelle (213) et à un véhicule (214), qui sont associés à la route offerte.

15. Système destiné à mettre en œuvre un procédé selon l'une quelconque des revendications 1 à 13, comprenant
un équipement routier (10) selon la revendication 14,
un dispositif de traitement de données (50) destiné à mettre à disposition l'ensemble de routes (230) et à mettre en œuvre le traitement (115) et la coordination (120).

16. Programme d'ordinateur (310) destiné à mettre en œuvre un procédé selon l'une quelconque des revendications 1 à 13, comprenant des instructions qui, lorsqu'elles sont exécutées par au moins un moyen de traitement de données (16), amènent celui-ci à mettre en œuvre les étapes suivantes :
mise en œuvre d'une acquisition (105) d'une information d'entrée (220), qui est spécifique au moins à un lieu de départ souhaité (221) et à un lieu de destination souhaité (222) et à une information temporelle souhaitée (223) et à une exigence relative au véhicule (224), qui sont associés à une route souhaitée,
mise en œuvre d'une transmission (110) de l'information d'entrée (220) à au moins un dispositif de traitement de données (50), afin d'initier un traitement (115) de l'information d'entrée transmise (220) et de différentes informations d'itinéraire (210) dans un ensemble de routes (230), par lequel au moins une concordance et/ou une attribution de la route souhaitée à des routes offertes peut être déterminée, et afin d'initier une coordination (120) de véhicules (214) sur la base d'un résultat du traitement (115), l'ensemble de routes (230) comprenant les différentes informations d'itinéraire (210), chacune étant spécifique au moins à un lieu de départ (211) et à un lieu de destination (212) et à une information temporelle (213) et à un véhicule (214), qui sont associés à la route offerte.

17. Programme d'ordinateur (320) destiné à mettre en œuvre un procédé selon l'une quelconque des revendications 1 à 13, comprenant des instructions qui, lorsqu'elles sont exécutées par au moins un dispositif de traitement de données (50), amènent celui-ci à mettre en œuvre les étapes suivantes :
mise à disposition d'un ensemble de routes (230), l'ensemble de routes (230) comprenant différentes informations d'itinéraire (210), chacune étant spécifique au moins à un lieu de départ (211) et à un lieu de destination (212) et à une information temporelle (213) et à un véhicule (214), qui sont associés à une route offerte,
réception d'une information d'entrée acquise (220), qui est spécifique au moins à un lieu de départ souhaité (221) et à un lieu de destination souhaité (222) et à une information temporelle souhaitée (223) et à une exigence relative au véhicule (224), qui sont associés à une route souhaitée,
mise en œuvre d'un traitement (115) de l'information d'entrée reçue (220) et des informations d'itinéraire (210) dans l'ensemble de routes (230), afin de déterminer au moins une concordance et/ou une attribution de la route souhaitée aux routes offertes,
initiation d'une coordination (120) de véhicules (214) sur la base d'un résultat du traitement (115).
